# EUROPÄISCHE PATENTSCHRIFT

(11) **EP 3 824 198 B1**
(45) Veröffentlichungstag und Bekanntmachung des Hinweises auf die Patenterteilung: **09.04.2025**
(21) Anmeldenummer: 19737469.7
(22) Anmeldetag: 03.07.2019
(51) Int. Cl.: F16D 1/072, F16D 1/08, F16H 55/17

(54) **WELLE-NABE-VERBINDUNG UND VERFAHREN ZUM HERSTELLEN EINER WELLE-NABE-VERBINDUNG**
SHAFT-HUB CONNECTION AND METHOD OF MANUFACTURING A SHAFT-HUB CONNECTION
LIAISON ARBRE-MOYEU ET PROCÉDÈ DE RÉALISATION D'UNE LIAISON ARBRE-MOYEU

(30) Priorität: 17.07.2018 DE 102018005632
(43) Veröffentlichungstag der Anmeldung: 26.05.2021
(73) Patentinhaber: SEW-EURODRIVE GmbH & Co. KG, 76646 Bruchsal (DE)
(72) Erfinder: HÄCKER, Uwe, 76356 Weingarten (DE)
(86) Internationale Anmeldenummer: PCT/EP2019/025209
(87) Internationale Veröffentlichungsnummer: WO 2020/015853

(56) Entgegenhaltungen:
- EP-A1- 0 661 474
- EP-A2- 1 892 430
- WO-A1-2019/002402
- DE-A1- 2 333 040
- DE-B4- 10 137 024
- DE-C1- 10 137 025
- GB-A- 2 029 300

## Beschreibung

Die Erfindung betrifft eine Welle-Nabe-Verbindung und Verfahren zum Herstellen einer Welle-Nabe-Verbindung.

Aus der gattungsgemäßen DE 101 37 024 B4 ist eine Welle-Nabe-verbindung für eine Baureihe von Wellen bekannt, welche gemäß Merkmal j) des dortigen Anspruchs 1 ein Einschneiden einer Verzahnung in die Aufnahmebohrung offenbart, weil zwischen dem zylindrischen Bereich und der Verzahnung ein Freistich, insbesondere eine Ringnut, angeordnet ist.

Weitere Welle-Naben-Verbindungen mit eingepressten Verzahnungsbereichen und zugeordneten zylindrischen Bereichen gehen aus den folgenden Dokumenten hervor:
**Aus der** EP 1 892 430 A2 **ist ein Verfahren zur Befestigung eines Zahnrads** an einem Planetenträger oder zum Verbinden von zwei Zahnräder **bekannt.**
**Aus der** GB 2 029 300 A **ist eine Verbindung von** einer Welle mit einem Zahnrad **bekannt.**
**Aus der** DE 101 37 025 C1 **ist eine Baureihe von** Wellen, z.B. Ritzel, zur Befestigung in einer Bohrung eines Aufnahmeteiles **bekannt.**
**Aus der** EP 0 661 474 A1 **ist eine Wellenbefestigung** bekannt, bei der die Welle über einen an dieser vorgesehenen über einen Teilbereich ihrer Länge gezahnten Bereich formschlüssig in eine Bohrung eines Aufnahmeteiles eingepresst ist.
**Aus der nachveröffentlichten** WO 2019 002 402 A1 **ist eine Welle-Nabe-Verbindung** zum Verbinden einer Welle mit einem Riemenscheibe **bekannt.**
**Aus der** DE 23 33 040 A1 **ist eine feste Verbindung eines Wellenzapfens mit der Nabe**
**eines** Anschlussorgans, insbesondere mit der Gabel eines Kreuzgelenks, **bekannt.**

Der Erfindung liegt daher die Aufgabe zugrunde, eine Welle-Nabe-Verbindung herzustellen und/oder weiterzubilden, wobei die Verbindung sicher sein soll.

Erfindungsgemäß wird die Aufgabe bei der Welle-Nabe-Verbindung nach den in Anspruch 1 **oder** 2 **und** bei dem Verfahren zum Herstellen einer Welle-Nabe-Verbindung nach den in **Anspruch** 9 angegebenen Merkmalen gelöst.

Wichtige Merkmale der Erfindung bei der Welle-Nabe-Verbindung sind, dass die Welle-Nabe-Verbindung eine Nabe und eine Welle aufweist,
wobei die Welle zumindest teilweise in die Nabe eingepresst ist,
wobei die Welle einen zylindrischen Bereich und einen Bereich einer Verzahnung aufweist, wobei zwischen dem zylindrischen Bereich und dem Bereich der Verzahnung ein Übergangsbereichangeordnet ist, dessen Außendurchmesser vom zylindrischen Bereich zum Bereich der Verzahnung monoton ansteigt,
wobei die Nabe eine Aufnahmebohrung aufweist, in welche der zylindrische Bereich und der Bereich einer Verzahnung eingepresst sind,
wobei die Aufnahmebohrung vor dem Einpressen der Welle einen unabhängig von der axialen Position konstanten Innendurchmesser aufweist.

Von Vorteil ist dabei, dass die Verbindung zwischen Welle und Nabe formschlüssig gesichert ist, da die Verzahnung nicht eingeschnitten ist, sondern ein plastisches Fließen des Materials der Welle bewirkt ist, welches den minimalen Innendurchmesser im Bereich der Verzahnung reduziert und somit ein formschlüssiges Sichern bewirkt. Denn im zylindrischen Bereich ist der Innendurchmesser im Wesentlichen unverändert und somit größer als der minimale Innendurchmesser der Nabe im Bereich der Verzahnung, also in dem von der Verzahnung axial überdeckten Bereich.

Bei der Welle-Nabe-Verbindung nach Anspruch 1 steigt der Außendurchmesser des Übergangsbereichs vom zylindrischen Bereich zum Bereich der Verzahnung stetig an. Von Vorteil ist dabei, dass eine Abnutzung der Verzahnung, insbesondere der stirnseitigen Kante der Verzahnung, verhindert ist.

Bei **der Welle-Nabe-Verbindung nach Anspruch** grenzt der zylindrische Bereichdirekt an den Bereich der Verzahnung an.

Trotz der Sprungstelle im Durchmesserverlauf ist die Spanbildung verhindert und ein Fließen von Material bewirkt, insbesondere, weil kein Raumbereich für Einströmendes Material vorhanden ist. Auf diese Weise werden aber die Lücken gefüllt und somit eine formschlüssige Verbindung erreicht.

**Von Vorteil ist** dabei weiter, dass kein Übergangsbereich notwendig ist. Denn das verdrängte plastisch verformte Material wird bei fehlendem Übergangsbereich vollständig in die Lückenbereiche der Verzahnung geleitet.

Bei der Welle-Nabe-Verbindung nach Anspruch 2 ist **der Fußkreisdurchmesser des Bereichs der Verzahnungkleiner als der Außendurchmesser des zylindrischem** Bereichs, **wobei der Kopfkreisdurchmesser des Bereichs der Verzahnung größer ist als der Außendurchmesser des zylindrischen** Bereichs. **Von Vorteil ist dabei, dass das verdrängte Material vollständig in die Lückenbereiche leitbar ist, da die Lücke radial tiefer als der zylindrische Bereich angeordnet ist.**

Bei einer vorteilhaften Ausgestaltung ist die Verbindung spanfrei und ist Material der Nabe nur plastisch verformt. Von Vorteil ist dabei, dass das Material hoch tragfähig ist. Insbesondere ist die Nabe somit viel tragfähiger als bei beim Einpressen der Verzahnung der Welle in die Aufnahmebohrung mit spanender Bearbeitung der Aufnahmebohrung durch die Verzahnung.

Bei einer vorteilhaften Ausgestaltung weist die Welle einen Freistich auf, welcher sich an der von dem zylindrischen Bereich axial, insbesondere axial gesehen, abgewandten Seite des Bereichs der Verzahnung an den Bereich der Verzahnung anschließt. Von Vorteil ist dabei, dass ein Auslauf für das die Verzahnung herstellendes Werkzeug vorsehbar ist.

Bei einer vorteilhaften Ausgestaltung schließt sich ein Bereich einer weiteren Verzahnung an den Freistich an auf der von dem Bereich der Verzahnung E abgewandten Seite des Freistichs, insbesondere wobei der Außendurchmesser der weiteren Verzahnung größer ist als der Außendurchmesser der Verzahnung. Von Vorteil ist dabei, dass die weitere Verzahnung als Laufverzahnung verwendbar ist. Beispielsweise ist die weitere Verzahnung als eintreibendes Ritzel eines Getriebes verwendbar und/oder als Sonnenradverzahnungsteil eines Planetengetriebes.

Bei einer vorteilhaften Ausgestaltung schließt sich ein zylindrischer, als Einfädelbereich fungierender Bereich an den von der Verzahnungabgewandten Seite des zylindrischen Bereichs an. Von Vorteil ist dabei, dass ein Einfädeln erleichtert ist.

Bei einer vorteilhaften Ausgestaltung schließt sich an der von dem zylindrischen Bereich abgewandten Seite des zylindrischen, als Einfädelbereichfungierenden Bereichs eine Fase an. Von Vorteil ist dabei, dass das Einfädeln vereinfacht ausgeführt ist.

Bei einer vorteilhaften Ausgestaltung weist die Nabe an ihrer äußeren Oberfläche eine Ringnut zum Abstützen eines Presswerkzeugs auf, mittels dessen die Welle in die Nabe einpressbar ist. Von Vorteil ist dabei, dass hohe Presskräfte aufbringbar ist und mittels der Führung durch den zylindrischen Bereich ein hochgenaues Einpressen ermöglicht ist.

Von vorteil ist, dass bei der erfindungsgemäßen Welle-Nabe-Verbindung die in die Nabe zumindest teilweise eingepresste Welle formschlüssig gehalten ist, so dass die Verbindung sicher gewährleistet ist.

Wichtige Merkmale bei dem Verfahren zum Herstellen einer Welle-Nabe-Verbindung sind, dass in einem ersten Verfahrensschritt eine Aufnahmebohrung in der Nabe erzeugt wird, welche einen unabhängig von der axialen Position konstanten Innendurchmesser aufweist, in einem nachfolgenden zweiten Verfahrensschritt die Welle zumindest teilweise in die Nabe eingepresst wird,
wobei die Welle einen zylindrischen Bereich und einen Bereich einer Verzahnung
aufweist, wobei zwischen dem zylindrischen Bereich und dem Bereich der Verzahnung ein Übergangsbereich angeordnet ist, dessen Außendurchmesser vom zylindrischen Bereich zum Bereich der Verzahnung monoton ansteigt,
wobei der zylindrische Bereich in die Aufnahmebohrung derart tief eingepresst wird, dass der Bereich der Verzahnungzumindest teilweise in der Aufnahmebohrung eingepresst ist,
wobei der Außendurchmesser des Übergangsbereichs vom zylindrischen Bereich zum Bereich der Verzahnung monoton ansteigt, und wobei beim Einführen der Welle in die Aufnahmebohrung der Nabe der zylindrische Bereich das Material der Nabe abstützt und keine Freiraum zur Spanbildung zulässt, so dass das von den Zähnen der Verzahnung verdrängte Material der Nabe in die Lücken der Verzahnung fließt und somit der kleinsten Innendurchmesser der Nabe im axialen Bereich der Verzahnung nach dem Einschieben kleiner als der Außendurchmesser der Welle im zylindrischen Bereich ist.

Bei einer vorteilhaften Ausgestaltung ist das Übermaß der Zähne der Verzahnung E relativ zum Innendurchmesser der Aufnahmebohrung derart gewählt, dass das von den Zähnen beim Einpressen in die Aufnahmebohrung verdrängte Material der Nabe zwischen 30% und 80% der Lücken der Verzahnung E füllt. Von Vorteil ist dabei, dass genügend viel Freiraum in den Lücken vorhanden ist, der von dem fließenden Material ausfüllbar ist. Somit ist ein axiales Einpressen mittels plastischem Fließen des Materials der Nabe ermöglicht, wobei keine Spanbildung auftritt.

Somit bezieht sich die Erfindung also auf eine Welle-Nabe-Verbindung, wobei in die Aufnahmebohrung der Nabe eine Welle mit einem zylindrischen Bereich und nachfolgend mit einem Verzahnungsbereich eingepresst wird, wobei kein Freistich sondern ein Übergangsbereich zwischengeordnet ist.

Vorteiligerweise tritt dabei keine Spanbildung auf sondern plastisches Fließen von Material in die Lücken der Verzahnung; daher ist auf eine einfache Weise die Welle mit der Nabe axial formschlüssig verbunden, weil der minimale Innendurchmesser der Nabe im axialen Bereich der Verzahnung kleiner ist als der minimale Innendurchmesser der Nabe im zylindrischen Bereich.

Weitere Vorteile ergeben sich aus den Unteransprüchen.

Die Erfindung wird nun anhand von schematischen Abbildungen näher erläutert:

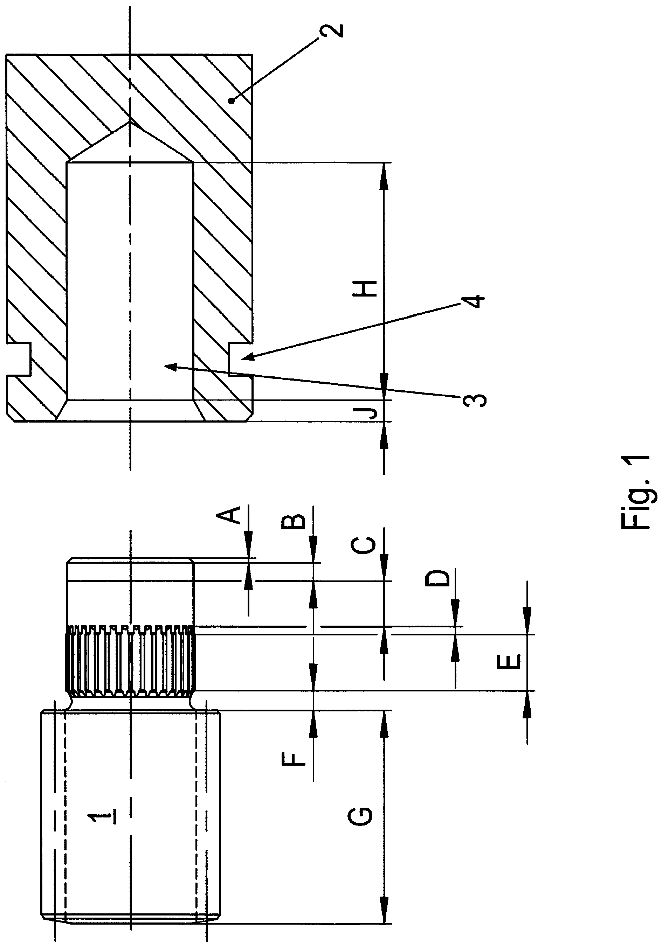

In der Figur 1 sind die Welle 1 in Seitenansicht und separat die Nabe 2 in Schnittansicht einer Welle-Naben-Verbindung dargestellt.

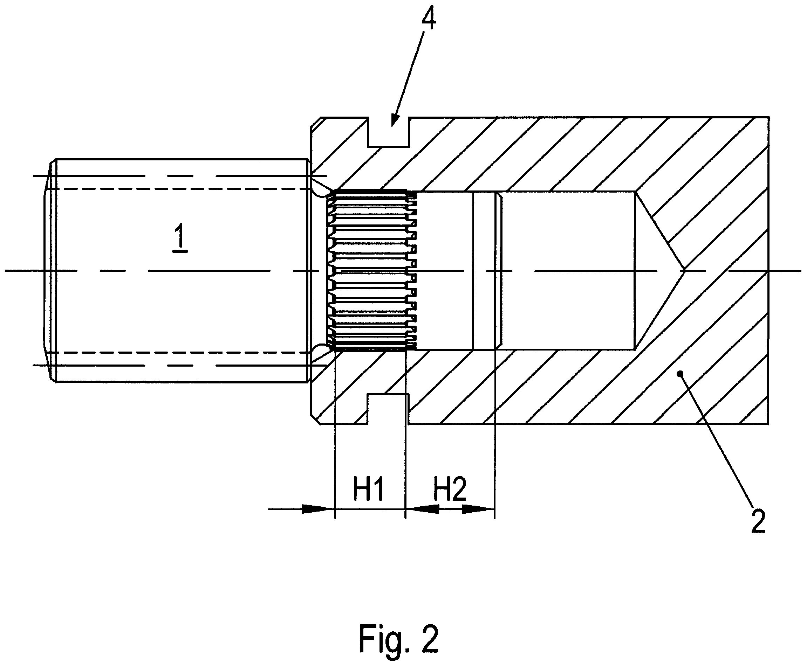

In der Figur 2 ist die Welle-Nabe-Verbindung dargestellt.
In der Figur 3 ist die Welle-Nabe-Verbindung mit einem angeschnittenen Bereich dargestellt.

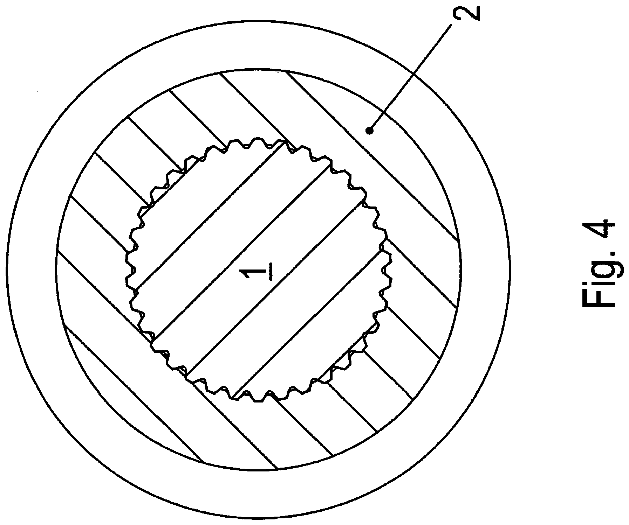

In der Figur 4 ist ein Querschnitt A-A der Ausführung nach Figur 3 dargestellt.

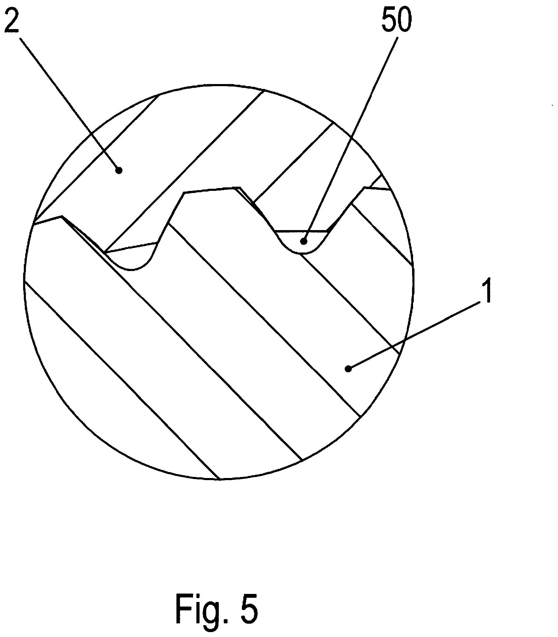

In der Figur 5 ist ein vergrößerter Ausschnitt der Figur 4 dargestellt.

Wie in den Figuren dargestellt, weist die Welle 1 einen Zapfenbereich (A, B, C, D, E, F) auf, welcher zumindest teilweise in eine Aufnahmebohrung 3 der Nabe 2 eingepresst ist.

Die Welle 1 wird beispielhaft als Einsteckritzel ausgeführt. Dabei ist im Bereich G eine Verzahnung, insbesondere Schneckenverzahnung oder Evolventenverzahnung eingearbeitet.

Die Welle 1 weist an ihrem von der Nabe 2 abgewandten axialen Endbereich eine Verzahnung G auf, an welche sich ein Freistich F anschließt, welcher für das Auslaufen eines Rändelwerkzeugs und zur Verminderung von Kerbwirkungen vorgesehen ist. Die von dem Rändelwerkzeug erzeugte Verzahnung E, insbesondere Rändelverzahnung, schließt sich auf der von der Verzahnung G abgewandten Seite an.

Die Verzahnung E ist überschliffen, also der Außendurchmesser E durch Schleifbearbeitung sehr genau bestimmt.

An der vom Freistich F abgewandten Seite der Verzahnung E schließt sich ein Übergangsbereich D an, der zwischen der Verzahnung E und einem zylindrischen Bereich für Presssitz angeordnet ist.

Auf der vom Übergangsbereich D abgewandten Seite des zylindrischen Bereichs C schließt sich an den zylindrischen Bereich C ein Einfädelbereich B an welcher einen geringeren Außendurchmesser aufweist als der zylindrische Bereich C. Außerdem ist der

Außendurchmesser des Einfädelbereichs B kleiner als der Innendurchmesser im Bereich der Aufnahmebohrung der Nabe 2.

Die Nabe 2 weist in ihrem Mündungsbereich der Aufnahmebohrung 3 zur Umgebung hin eine Fase auf, die als Bereich J in den Figuren gekennzeichnet ist.

Beim Einfügen der Welle 1 in die Nabe 2 erleichtert die am axialen Ende der Welle 1 angeordnete Fase A zusammen mit der Fase J der Aufnahmebohrung der Nabe 2 das Einfädeln.

Bei weiterem Einschieben der Welle 1 in die Nabe 2 wird der Einfädelbereich B spielbehaftet in die Aufnahmebohrung 3 eingeführt.

Somit ist das Finden der exakten koaxialen Lage der Welle 1 zur Nabe 2 vereinfacht.

Beim weiteren Einführen der Welle 1 in die Aufnahmebohrung der Nabe 2 wird der zylindrische Bereich C immer weiter eingepresst in die Aufnahmebohrung J.

Somit ist die Welle 1 nun mittig zentriert, also koaxial ausgerichtet, und für das weitere Einführen stabil zentriert.

Beim weiteren Einführen der Welle in die Nabe dringt zunächst der Übergangsbereich D in die Aufnahmebohrung 3 ein und danach beginnt das Einpressen der Zähne der Verzahnung E, insbesondere Rändelverzahnung, in die Aufnahmebohrung 3.

Obwohl der Außendurchmesser der Verzahnung E größer ist als der Innendurchmesser der Aufnahmebohrung 3, entstehen keine Späne, da der Zylindrische Bereich C, insbesondere zusammen mit dem Übergangsbereich D das Material der Nabe 2 abstützt und keine Freiraum zur Spanbildung zulässt.

Somit fließt das Material der Nabe 2 in die Lücken der Verzahnung E der Welle 1.

Am äußeren Umfang der Nabe 2 ist eine Ringnut 4 zum Abstützen eines Presswerkzeugs ausgeformt, welches die Welle in die Aufnahmebohrung 3 der Nabe 2 einpresst.

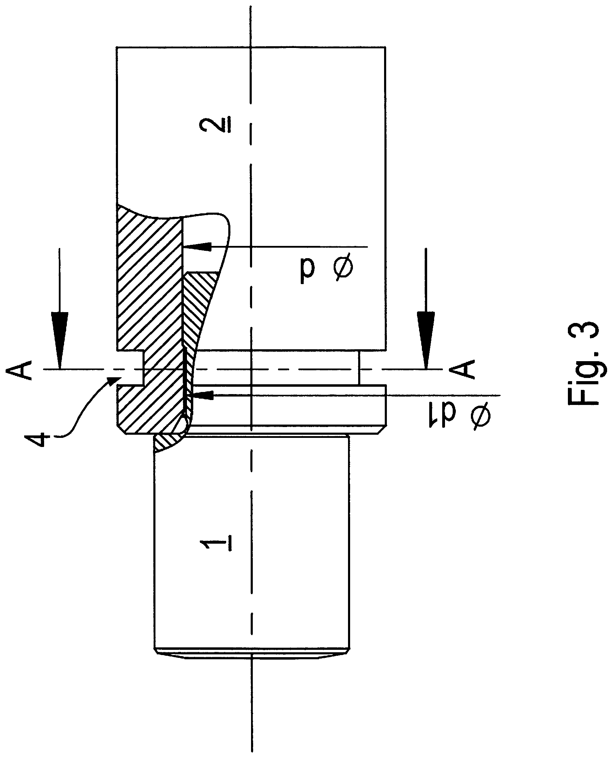

In Figur 3 ist der Innendurchmesser der Aufnahmebohrung 3 mit Bezugszeichen d bezeichnet.

Somit liegt der zylindrische Bereich C an diesem Innendurchmesser d an und weist selbst den Außendurchmesser d auf.

Der kleinste Innendurchmesser des Materials der Nabe 2 im axialen Bereich der Verzahnung C ist in Figur 3 mit dem Bezugszeichen d1 bezeichnet.

Da nach dem Einschieben der Welle 1 in die Aufnahmebohrung 3 der Nabe 2 das von den Zähnen der Verzahnung C verdrängte Material in die Lücken der Verzahnung geflossen ist, ist der Durchmesser d1 kleiner als d.

Auf diese Weise ist eine formschlüssige axiale Sicherung der Welle 1 in der Aufnahmebohrung 3 erreicht. Insbesondere ist nach dem Einpressen der Welle 1 in die Aufnahmebohrung 3 der Nabe 2 ein zerstörungsfreies Herausziehen nicht mehr möglich.

Das Übermaß der Zähne der Verzahnung E relativ zum Innendurchmesser der Aufnahmebohrung 3 ist derart gewählt, dass ungefähr das von den Zähnen der Verzahnung E verdrängte Materials der Nabe 2 die Lücken der Verzahnung E jeweils ungefähr zur Hälfte füllt, insbesondere also jede Lücke im Querschnitt zwischen 30% und 80% gefüllt ist.

Wichtig ist dabei, dass der axiale Verlauf des Außendurchmessers des Übergangsbereichs monoton ist und vom Außendurchmesser des zylindrischen Bereichs bis zum Außendurchmesser der Verzahnung E monoton zunimmt. Ein unstetiger Verlauf ist dabei nicht schädlich. Auf keinen Fall aber darf hier ein Freistich oder eine Ringnut vorgesehen werden, weil dann eine Spanbildung, also ein Einschneiden, auftritt.

Es ist keine Spanbildung vorhanden, sondern nur ein plastisches Fließen des verdrängten Materials in die Lücken der Verzahnung E.

Bei weiteren erfindungsgemäßen Ausführungsbeispielen geht der Außendurchmesser des Übergangsbereichs D vom Bereich der Verzahnung E bis zum zylindrischen Bereich C nicht unstetig, also sprunghaft, sondern stetig über. Der Außendurchmesser nimmt also stetig zum zylindrischen Bereich hin ab.

Bei weiteren erfindungsgemäßen Ausführungsbeispielen grenzt der Bereich E direkt an den Bereich C an, insbesondere so dass der Übergangsbereich D eine verschwindend geringe axiale Ausdehnung aufweist.

### Bezugszeichenliste

1 Welle
2 Nabe
3 Aufnahmebohrung
4 Ringnut zum Abstützen eines Presswerkzeugs
50 Freiraum
A Fase
B Einfädelbereich
C zylindrischer Bereich für Presssitz
D Übergangsbereich
E Verzahnung, insbesondere Rändelverzahnung
F Freistich, insbesondere für Rändelwerkzeug und für Verminderung von Kerbwirkung
G Verzahnung, insbesondere Laufverzahnung, wie Sonnenradverzahnung
H Bereich der Aufnahmebohrung mit konstantem Innendurchmesser
J Fase
H1 Fließbereich
H2 Presssitz

## Patentansprüche

1. Welle-Nabe-Verbindung,
aufweisend eine Nabe (2) und eine Welle (1), wobei die Welle (1) zumindest teilweise in die Nabe (2) eingepresst ist,
wobei die Welle (1) einen zylindrischen Bereich (C) und einen Bereich einer Verzahnung (E)
aufweist, wobei zwischen dem zylindrischen Bereich (C) und dem Bereich der Verzahnung (E) ein Übergangsbereich (D) angeordnet ist,
wobei die Nabe (2) eine Aufnahmebohrung (3) aufweist, in welche der zylindrische Bereich (C) und der Bereich der Verzahnung (E) eingepresst sind, wobei die Aufnahmebohrung (3) vor dem Einpressen der Welle (1) einen unabhängig von der axialen Position konstanten Innendurchmesser (d) aufweist,
**dadurch gekennzeichnet, dass**
**der Außendurchmesser des Übergangsbereichs** (D) **vom zylindrischen Bereich** (C) **zum Bereich der Verzahnung** (E) **stetig ansteigt,**
**wobei der Fußkreisdurchmesser des Bereichs der Verzahnung** (E) **kleiner ist als der Außendurchmesser des zylindrischem Bereichs** (C),
**wobei der Kopfkreisdurchmesser des Bereichs der Verzahnung** (E) **größer ist als der Außendurchmesser des zylindrischen Bereichs** (C).

2. **Welle-Nabe-Verbindung, aufweisend eine Nabe** (2) **und eine** Welle (1), **wobei die Welle** (1) **zumindest teilweise in die Nabe** (2) **eingepresst ist,**
**wobei die Welle** (1) **einen zylindrischen Bereich** (C) **und einen Bereich einer Verzahnung** (E) **aufweist,**
**wobei die Nabe** (2) eine **Aufnahmebohrung** (3) **aufweist, in welche der zylindrische Bereich** (C) **und der Bereich** der **Verzahnung** (E) **eingepresst sind,**
**wobei die Aufnahmebohrung** (3) **vor dem Einpressen der Welle** (1) **einen unabhängig von der axialen Position konstanten Innendurchmesser** (d) **aufweist,**
**dadurch gekennzeichnet, dass**
der zylindrische Bereich (C) direkt an den Bereich der Verzahnung (E) angrenzt, **der Fußkreisdurchmesser des Bereichs der Verzahnung** (E) **kleiner ist als der Außendurchmesser des zylindrischem Bereichs** (C),
**wobei der Kopfkreisdurchmesser des Bereichs der Verzahnung** (E) **größer ist als der Außendurchmesser des zylindrischen Bereichs** (C),
**wobei der** der zylindrische Bereich (C) **an dem Innendurchmesser** (d) **der Aufnahmebohrung** (3) anliegt, wobei der Außendurchmesser des zylindrischen Bereichs (C) den Innendurchmesser (d) der Aufnahmebohrung (3) entspricht,
**wobei der kleinste Innendurchmesser** (d1) **des Materials der Nabe** (2) **im axialen Bereich der Verzahnung** (E) **inach dem Einschieben der Welle** (1) **in die Aufnahmebohrung** (3) **der Nabe** (2), wobei **das von den Zähnen der Verzahnung** (E) **verdrängte Material in die Lücken** (50) **der Verzahnung geflossen** ist, kleiner ist als der Innendurchmesser (d) der Aufnahmebohrung (3) der Nabe (2).

3. Welle-Nabe-Verbindung nach mindestens einem der vorangegangenen Ansprüche, **dadurch gekennzeichnet, dass** die Verbindung spanfrei ist und Material der Nabe nur plastisch, verformt ist.

4. Welle-Nabe-Verbindung nach mindestens einem der vorangegangenen Ansprüche, **dadurch gekennzeichnet, dass** die Welle (1) einen Freistich (F) aufweist, welcher sich an der von dem zylindrischen Bereich (C) axial abgewandten Seite des Bereichs der Verzahnung (E) an den Bereich der Verzahnung (E) anschließt.

5. Welle-Nabe-Verbindung nach Anspruch 4,
**dadurch gekennzeichnet, dass**
sich ein Bereich einer weiteren Verzahnung (G) an den Freistich (F) anschließt auf der von dem Bereich der Verzahnung (E) abgewandten Seite des Freistichs F, insbesondere wobei der Außendurchmesser der weiteren Verzahnung (G) größer ist als der Außendurchmesser der Verzahnung (E).

6. Welle-Nabe-Verbindung nach mindestens einem der vorangegangenen Ansprüche,
**dadurch gekennzeichnet, dass**
sich ein zylindrischer, als Einfädelbereich (B) fungierender Bereich an den von der Verzahnung (E) abgewandten Seite des zylindrischen Bereichs (C) anschließt.

7. Welle-Nabe-Verbindung nach Anspruch 6,
**dadurch gekennzeichnet, dass**
an der von dem zylindrischen Bereich (C) abgewandten Seite des zylindrischen, als Einfädelbereich (B) Bfungierenden Bereichs eine Fase (A) anschließt.

8. Welle-Nabe-Verbindung nach mindestens einem der vorangegangenen Ansprüche,
**dadurch gekennzeichnet, dass**
die Nabe (2) an ihrer äußeren Oberfläche eine Ringnut (4) zum Abstützen eines Presswerkzeugs aufweist, mittels dessen die Welle (1) in die Nabe (2) einpressbar ist.

9. Verfahren zum Herstellen einer Welle-Nabe-Verbindung, insbesondere nach mindestens einem der vorangegangenen Ansprüche,
**dadurch gekennzeichnet, dass**
in einem ersten Verfahrensschritt eine Aufnahmebohrung (3) in der Nabe (2) erzeugt wird, welche
einen unabhängig von der axialen Position konstanten Innendurchmesser (d) aufweist,
in einem nachfolgenden zweiten Verfahrensschritt die Welle: (1) zumindest teilweise in die Nabe (2) eingepresst wird,
wobei die Welle (1) einen zylindrischen Bereich (C) und einen Bereich einer Verzahnung (E)
aufweist, wobei zwischen dem zylindrischen Bereich (C) und dem Bereich der Verzahnung (E) ein Übergangsbereich (D) angeordnet ist,
wobei der zylindrische Bereich (C) in die Aufnahmebohrung (3) derart tief eingepresst wird, dass
der Bereich der Verzahnung (E) zumindest teilweise in der Aufnahmebohrung (3) eingepresst ist,
**dadurch gekennzeichnet, dass** der Außendurchmesser des Übergangsbereichs (D) vom zylindrischen Bereich (C) zum Bereich der Verzahnung (E) monoton ansteigt, und dass beim Einführen **Welle** (1) **in die Aufnahmebohrung** (3) **der Nabe** (2) der zylindrische Bereich (C) das Material der Nabe (2) abstützt, so dass **das von den Zähnen der Verzahnung** (E) **verdrängte Material** der Nabe (2) **in die Lücken der Verzahnung** fließt **und somit** nach dem Einschieben der kleinsten Innendurchmesser (d1) **der Nabe** (2) **im axialen Bereich der Verzahnung** (E) **kleiner als der** Außendurchmesser **der Welle** (1) **im zylindrischen Bereich** (C) **ist.**

10. Verfahren nach Anspruch 9,
**dadurch gekennzeichnet, dass**
das Übermaß der Zähne der Verzahnung (E) relativ zum Innendurchmesser (d) der Aufnahmebohrung (3) derart gewählt ist, dass das von den Zähnen beim Einpressen in die Aufnahmebohrung (3) verdrängte Material der Nabe (2) zwischen 30% und 80% der Lücken (50) **der** Verzahnung (E) füllt.

## Claims

1. A shaft-hub connection,
having a hub (2) and a shaft (1),
wherein the shaft (1) is at least partially pressed into the hub (2),
wherein the shaft (1) has a cylindrical region (C) and a region of a toothing (E), wherein between the cylindrical region (C) and the region of the toothing (E) there is arranged a transition region (D),
wherein the hub (2) has a receiving bore (3) into which the cylindrical region (C) and the region of the toothing (E) are pressed,
wherein before the pressing-in of the shaft (1), the internal diameter (d) of the receiving bore (3) is constant irrespective of the axial position,
**characterised in that**
the external diameter of the transition region (D) increases steadily from the cylindrical region (C) to the region of the toothing (E),
wherein the root diameter of the region of the toothing (E) is smaller than the external diameter of the cylindrical region (C),
wherein the tip diameter of the region of the toothing (E) is greater than the external diameter of the cylindrical region (C).

2. A shaft-hub connection,
having a hub (2) and a shaft (1),
wherein the shaft (1) is at least partially pressed into the hub (2),
wherein the shaft (1) has a cylindrical region (C) and a region of a toothing (E),
wherein the hub (2) has a receiving bore (3) into which the cylindrical region (C) and the region of the toothing (E) are pressed,
wherein before the pressing-in of the shaft (1), the internal diameter (d) of the receiving bore (3) is constant irrespective of the axial position,
**characterised in that**
the cylindrical region (C) directly adjoins the region of the toothing (E),
the root diameter of the region of the toothing (E) is smaller than the external diameter of the cylindrical region (C),
wherein the tip diameter of the region of the toothing (E) is greater than the external diameter of the cylindrical region (C),
wherein the cylindrical region (C) rests against the internal diameter (d) of the receiving bore (3), wherein the external diameter of the cylindrical region (C) corresponds to the internal diameter (d) of the receiving bore (3),
wherein the smallest internal diameter (d1) of the material of the hub (2) in the axial region of the toothing (E) after the insertion of the shaft (1) into the receiving bore (3) of the hub (2), wherein material displaced by the teeth of the toothing (E) has flowed into the gaps (50) of the toothing, is smaller than the internal diameter (d) of the receiving bore (3) of the hub (2).

3. A shaft-hub connection according to at least one of the preceding claims,
**characterised in that**
the connection is chip-free and material of the hub is only plastically deformed.

4. A shaft-hub connection according to at least one of the preceding claims,
**characterised in that**
the shaft (1) has an undercut (F) which adjoins the region of the toothing (E) at that side of the region of the toothing (E) axially facing away from the cylindrical region (C).

5. A shaft-hub connection according to claim 4,
**characterised in that**
a region of a further toothing (G) adjoins the undercut (F) at that side of the undercut (F) facing away from the region of the toothing (E),
in particular wherein the external diameter of the further toothing (G) is greater than the external diameter of the toothing (E).

6. A shaft-hub connection according to at least one of the preceding claims,
**characterised in that**
a cylindrical region acting as a mounting region (B) adjoins that side of the cylindrical region (C) facing away from the toothing (E).

7. A shaft-hub connection according to claim 6,
**characterised in that**
a chamfer (A) adjoins that side, facing away from the cylindrical region (C), of the cylindrical region acting as a mounting region (B).

8. A shaft-hub connection according to at least one of the preceding claims,
**characterised in that**
the outer surface of the hub (2) has an annular groove (4) for supporting a pressing tool by means of which the shaft (1) can be pressed into the hub (2).

9. A method of producing a shaft-hub connection, in particular according to at least one of the preceding claims,
**characterised in that**
in a first method step there is produced a receiving bore (3) in the hub (2), which bore has an internal diameter (d) which is constant irrespective of the axial position,
in a subsequent second method step the shaft (1) is at least partially pressed into the hub (2), wherein the shaft (1) has a cylindrical region (C) and a region of a toothing (E),
wherein between the cylindrical region (C) and the region of the toothing (E) there is arranged a transition region (D),
wherein the cylindrical region (C) is pressed into the receiving bore (3) to a depth such that the region of the toothing (E) is at least partially pressed in the receiving bore (3), **characterised in that**
the external diameter of the transition region (D) increases monotonically from the cylindrical region (C) to the region of the toothing (E), and **in that** upon insertion of the shaft (1) into the receiving bore (3) of the hub (2), the cylindrical region (C) supports the material of the hub (2) so that the material of the hub (2) displaced by the teeth of the toothing (E) flows into the gaps of the toothing and consequently after the insertion the smallest internal diameter (d1) of the hub (2) in the axial region of the toothing (E) is smaller than the external diameter of the shaft (1) in the cylindrical region (C).

10. A method according to claim 9,
**characterised in that**
the oversize of the teeth of the toothing (E) relative to the internal diameter (d) of the receiving bore (3) is selected in such a manner that the material of the hub (2) displaced by the teeth upon pressing into the receiving bore (3) fills between 30% and 80% of the gaps of the toothing (E).

## Revendications

1. Liaison arbre-moyeu
comprenant un moyeu (2) et un arbre (1),
lequel arbre (1) est au moins partiellement emboîté à force dans ledit moyeu (2),
ledit arbre (1) comportant une région cylindrique (C) et une région d'une denture (E),
une zone de transition (D) étant interposée entre ladite région cylindrique (C) et ladite région de la denture (E),
sachant que le moyeu (2) est muni d'un alésage de réception (3) dans lequel ladite région cylindrique (C) et ladite région de la denture (E) sont emboîtées à force,
lequel alésage de réception (3) présente, préalablement à l'emboîtement à force de l'arbre (1), un diamètre intérieur (d) constant indépendamment de l'emplacement axial, **caractérisée par le fait que**
le diamètre extérieur de la zone de transition (D) croît, de manière continue, de la région cylindrique (C) à la région de la denture (E),
le diamètre du cercle de pied de ladite région de la denture (E) étant plus petit que le diamètre extérieur de ladite région cylindrique (C),
le diamètre du cercle de tête de ladite région de la denture (E) étant plus grand que ledit diamètre extérieur de la région cylindrique (C).

2. Liaison arbre-moyeu
comprenant un moyeu (2) et un arbre (1),
lequel arbre (1) est au moins partiellement emboîté à force dans ledit moyeu (2),
ledit arbre (1) comportant une région cylindrique (C) et une région d'une denture (E), sachant que le moyeu (2) est muni d'un alésage de réception (3) dans lequel ladite région cylindrique (C) et ladite région de la denture (E) sont emboîtées à force,
lequel alésage de réception (3) présente, préalablement à l'emboîtement à force de l'arbre (1), un diamètre intérieur (d) constant indépendamment de l'emplacement axial, **caractérisée par le fait que**
la région cylindrique (C) est directement limitrophe de la région de la denture (E),
le diamètre du cercle de pied de ladite région de la denture (E) étant plus petit que le diamètre extérieur de ladite région cylindrique (C),
le diamètre du cercle de tête de ladite région de la denture (E) étant plus grand que ledit diamètre extérieur de la région cylindrique (C),
laquelle région cylindrique (C) est attenante au diamètre intérieur (d) de l'alésage de réception (3), le diamètre extérieur de ladite région cylindrique (C) correspondant audit diamètre intérieur (d) de l'alésage de réception (3),
le diamètre intérieur minimal du matériau du moyeu (2) présentant la valeur d1 dans la zone axiale de la denture (E) à l'issue de l'insertion de l'arbre (1) dans l'alésage de réception (3) dudit moyeu (2), sachant que
le matériau refoulé par les dents de ladite denture (E) a flué dans les entredents (50) de ladite denture, avec infériorité par rapport audit diamètre intérieur (d) de l'alésage de réception (3) dudit moyeu (2).

3. Liaison arbre-moyeu selon au moins l'une des revendications précédentes,
**caractérisée par le fait que**
ladite liaison est exempte de copeaux, et le matériau du moyeu est soumis uniquement à une déformation plastique.

4. Liaison arbre-moyeu selon au moins l'une des revendications précédentes,
**caractérisée par le fait que**
l'arbre (1) comporte une contre-dépouille (F) se rattachant à la région de la denture (E) du côté de ladite région de la denture (E) qui pointe axialement à l'opposé de la région cylindrique (C).

5. Liaison arbre-moyeu selon la revendication 4,
**caractérisée par le fait**
**qu'**une région d'une denture additionnelle (G) se rattache à la contre-dépouille (F) du côté de ladite contre-dépouille (F) qui pointe à l'opposé de la région de la denture (E),
le diamètre extérieur de ladite denture additionnelle (G) étant plus grand que le diamètre extérieur de la denture (E).

6. Liaison arbre-moyeu selon au moins l'une des revendications précédentes,
**caractérisée par le fait**
**qu'**une zone cylindrique, remplissant la fonction d'une zone d'insertion (B), se rattache au côté de la région cylindrique (C) qui pointe à l'opposé de la denture (E).

7. Liaison arbre-moyeu selon la revendication 4,
**caractérisée par le fait**
**qu'**un biseau (A) se rattache au côté de la zone cylindrique, remplissant la fonction d'une zone d'insertion (B), qui pointe à l'opposé de la région cylindrique (C).

8. Liaison arbre-moyeu selon au moins l'une des revendications précédentes,
**caractérisée par le fait que**
le moyeu (2) est pourvu, au niveau de sa surface extérieure, d'une rainure annulaire (4) conçue pour conférer un appui à un outil d'emboîtement à force au moyen duquel l'arbre (1) peut être emboîté à force dans le moyeu (2).

9. Procédé d'instauration d'une liaison arbre-moyeu conforme à au moins l'une des revendications précédentes,
**caractérisé par le fait que**,
lors d'une première étape opératoire, un alésage de réception (3), doté d'un diamètre intérieur (d) constant indépendamment de l'emplacement axial, est pratiqué dans le moyeu (2),
lors d'une seconde étape opératoire successive, l'arbre (1) est au moins partiellement emboîté à force dans ledit moyeu (2),
lequel arbre (1) comprend une région cylindrique (C) et une région d'une denture (E), sachant qu'une zone de transition (D) est interposée entre ladite région cylindrique (C) et ladite région de la denture (E),
ladite région cylindrique (C) étant emboîtée à force, dans ledit alésage de réception (3), d'une profondeur telle que ladite région de la denture (E) soit au moins partiellement emboîtée à force dans ledit alésage de réception (3),
**caractérisé par le fait que** le diamètre extérieur de la zone de transition (D) croît, avec allure monotone, de la région cylindrique (C) à la région de la denture (E) ; et **par le fait que**, lors de l'introduction de l'arbre (1) dans ledit alésage de réception (3) du moyeu (2), ladite région cylindrique (C) procure un appui au matériau dudit moyeu (2) de façon telle que ledit matériau du moyeu (2), refoulé par les dents de la denture (E), flue dans les entredents de ladite denture et que de ce fait, à l'issue de l'insertion, le diamètre intérieur minimal (d1) du moyeu (2) soit plus petit, dans la zone axiale de la denture (E), que le diamètre extérieur de l'arbre (1) dans ladite région cylindrique (C).

10. Procédé selon la revendication 9,
**caractérisé par le fait que**
le surdimensionnement de dents de la denture (E), par rapport au diamètre intérieur (d) de l'alésage de réception (3), est sélectionné de façon telle que le matériau du moyeu (2), refoulé par lesdites dents lors de l'emboîtement à force dans ledit alésage de réception (3), comble entre 30 % et 80 % des entredents (50) de ladite denture (E).
